# EUROPÄISCHE PATENTSCHRIFT

(11) **EP 0 978 409 B1**
(45) Veröffentlichungstag und Bekanntmachung des Hinweises auf die Patenterteilung: **05.03.2003**
(21) Anmeldenummer: 99114305.8
(22) Anmeldetag: 21.07.1999
(51) Int. Cl.: B60K 37/02

(54) **Kombinationsinstrument**
Combination instrument
Instrument combiné

(30) Priorität: 05.08.1998 DE 19835215
(43) Veröffentlichungstag der Anmeldung: 09.02.2000
(73) Patentinhaber: Siemens Aktiengesellschaft, 80333 München (DE)
(72) Erfinder: Erben, Thomas, 9453 Eichberg/SG (CH)

(56) Entgegenhaltungen:
- DE-A- 4 318 011
- DE-A- 19 537 233
- FR-A- 2 497 996

## Beschreibung

Die Erfindung betrifft ein Kombinationsinstrument, insbesondere für ein Wasserfahrzeug, mit einem Instrumententräger zur Aufnahme mehrerer Anzeigeinstrumente gemäß dem Oberbegriff des Anspruchs 1.

Kombinationsinstrumente der genannten Art werden heute vielfach bei unterschiedlichsten Land- und Wasserfahrzeugen, beispielsweise auch bei Yachten, aber auch bei stationär betriebenen Maschinen, z.B. Generatoren, eingesetzt. Ein zumeist kastenförmiger Instrumententräger nimmt hierbei mehrere Anzeigeinstrumente auf, die zum Schutz gegen eindringende Feuchtigkeit und Staubpartikel abgedichtet sind. Der Instrumententräger ist häufig mittels eines Tragbügels an einer geeigneten Stelle des Cockpits schwenkbar angeordnet, so dass der Ablesewinkel auf die Bedürfnisse des Benutzers individuell einstellbar ist. Die Anzeigeinstrumente können sowohl von vorn als auch von hinten in den Instrumententräger eingesetzt sein. Dieser eignet sich auch zum Nachrüsten weiterer Anzeigeinstrumente.

Nachteilig wirkt sich bei dem beschriebenen Kombinationsinstrument aus, dass die in entsprechende Ausnehmungen eingesetzten Anzeigeinstrumente sorgfältig gegenüber dem Instrumententräger abgedichtet werden müssen, da anderenfalls leicht Feuchtigkeit in das Kombinationsinstrument eindringen und zu Schäden an den Anzeigeinstrumenten führen kann.

Es ist bereits daran gedacht worden, den Instrumententräger mit einer Abdeckscheibe zu versehen, um so eine wirkungsvolle Abdichtung zu erzielen. Beispielhaft sei auf die DE 43 18 011 Al verwiesen. Es wirkt sich hierbei aus, dass die Anzeigeinstrumente bei dieser Anordnung entweder von der Rückseite des Instrumententrägers in das Gehäuse eingesetzt werden müssen oder aber die Abdeckscheibe lösbar mit dem Instrumententräger verbunden sein muss. Hierbei steigt der zur Abdichtung des Instrumententrägers erforderliche Aufwand mit zunehmender Größe des Kombinationsinstrumentes, so dass bei großen Ausführungsformen eine mehrteilige Abdeckscheibe erforderlich ist. Dies führt zu einem wenig ansprechenden Erscheinungsbild. Ferner ist der gestalterische Freiraum aufgrund der im wesentlichen flachen Abdeckscheibe stark begrenzt, so dass ein hiervon abweichendes Design kaum verwirklicht werden kann.

Der Erfindung liegt das Problem zugrunde, ein Kombinationsinstrument der genannten Art so auszuführen, dass der Instrumententräger besonders gut gegen eindringende Umwelteinflüsse geschützt ausgeführt ist. Zugleich sollen die Anzeigeinstrumente leicht in dem Instrumententräger montierbar sein.

Dieses Problem wird erfindungsgemäß dadurch gelöst, dass der Hohlkörper rohrförmig ist und dass die Enden des Hohlkörpers (2) jeweils mittels eines Seitenteiles (3,4) verschlossen sind.

Durch diese Gestaltung können die Anzeigeinstrumente im Inneren des mit Ausnahme einer Montageöffnung allseitig geschlossenen Hohlkörpers angeordnet werden, ohne dass hierzu eine spezielle Abdichtung erforderlich ist. Die Anzeigeinstrumente sind durch die Anordnung in dem transparenten Hohlkörper mühelos ablesbar; ist der Hohlkörper lediglich in Abschnitten transparent, so sind die Anzeigen der Anzeigeinstrumente durch diese Abschnitte sicht- und ablesbar. Dabei lassen sich entsprechende Hohlkörper in nahezu beliebigen Größen und Formen herstellen und individuell für unterschiedliche Verwendungszwecke anpassen. Beispielsweise sind Acrylglas-Hohlkörper als Meterware verwendbar, die daher lediglich in der gewünschten Länge abgetrennt werden müssen. Durch den einfachen und gegenüber Umwelteinflüssen dichten Aufbau des erfindungsgemäßen Instruments ist dieses vorteilhaft nicht nur in Wasser- und Straßenfahrzeugen, sondern auch in stationär betriebenen Maschinen und Anlagen - wie z.B. Generatoren - einsetzbar.

Die Anzeigeinstrumente können beispielsweise durch eine rückseitige Montageöffnung des Hohlkörpers in dessen Innenraum eingeführt werden. Außerdem können die Anzeigeinstrumente mühelose durch die zunächst unverschlossenen Enden des Hohlkörpers eingeführt und im Inneren des Hohlkörpers fixiert werden. Anschließend brauchen lediglich jeweils die Seitenteile aufgesetzt zu werden. Dabei ist es auch vorstellbar, dass der Hohlkörper mit einem der Seitenteile ein einziges Bauteil bildend verbunden ist. Ein solcher topfförmiger Hohlkörper wird von seiner offenen Seite her bestückt und mit dem zweiten Seitenteil verschlossen.

Der im Bereich der Rückseite der Anzeigeinstrumente befindliche Abschnitt des Hohlkörpers kann eine Abdeckung oder Beschichtung haben, um den Blick auf die Bauteile der Anzeigeinstrumente zu versperren. Besonders günstig ist jedoch eine Ausführungsform der Erfindung, bei der der Hohlkörper einen transparenten, der Vorderseite der Anzeigeinstrumente zugeneigten Abschnitt und einen undurchsichtigen, der Rückseite der Anzeigeinstrumente zugeneigten Abschnitt hat. Hierdurch wird ein einfacher und zugleich wirkungsvoller Sichtschutz gegenüber rückwärtigen Bauteilen erreicht. Dabei wird zusätzlich die Einstrahlung von Fremdlicht in die Rückseite der Anzeigeinstrumente verhindert, wodurch die Ablesegenauigkeit vor allem bei Dunkelheit und hintergrundbeleuchteten Anzeigeinstrumenten verbessert wird. Zugleich wird dadurch eine , Abschirmung der Umgebung des Kombinationsinstrumentes gegenüber diffus aus dem Hohlkörper austretender Lichtstrahlung der Anzeigeinstrumente erreicht, die häufig als störend empfunden wird.

Der Hohlkörper könnte hierzu beispielsweise aus einer transparenten und einer lichtundurchlässigen Halbschale zusammengesetzt sein. Besonders günstig ist es jedoch, wenn der Hohlkörper im Zweikomponenten-Spritzgieverfahren hergestellt ist und einen ersten, transparenten Bereich und einen zweiten, lichtundurchlässigen Bereich aufweist. Hierdurch lässt sich bei einem einteiligen Hohlkörper sowohl ein im wesentlichen transparenter Bereich als auch ein im wesentlichen lichtundurchlässiger Bereich erreichen. Der Montageaufwand ist dadurch relativ gering.

Der Hohlkörper kann an seiner Innenseite eine Aufnahme für die Anzeigeinstrumente aufweisen. Besonders vorteilhaft ist eine Ausführungsform der Erfindung, bei der die Seitenteile ein Fixiermittel für die Anzeigeinstrumente aufweisen. Dadurch lassen sich die Anzeigeinstrumente mit lediglich geringem Aufwand im Inneren des Hohlkörpers fixieren. Hierzu können die Anzeigeinstrumente beispielsweise zunächst mit dem Seitenteil verbunden und anschlieβend als Einheit in den Hohlkörper eingeführt werden. Daher entfällt der Aufwand, der bei bekannten Kombinationsinstrurnenten durch Montagetätigkeiten im Inneren des Instrumententrägers entsteht. Zugleich erfolgt die Fixierung der Anzeigeinstrumente aufgrund der Anordnung des Fixiermittels an den Seitenteilen unabhängig von dem Hohlkörper, welcher dadurch als Standardbauelement beschafft und beliebig abgelängt werden kann.

Besonders günstig ist es hierzu, wenn das Fixiermittel zum Einstecken einer gemeinsamen Platine der Anzeigeinstrumente ausgeführt ist. Eine solche Steckverbindung erlaubt die Fixierung der Platine in der beispielsweise als Nut ausgeführten Halterung ohne zusätzliche Befestigungsmittel und spezielle Werkzeuge. Die Anzeigeinstrumente können dadurch mit ihrer gemeinsamen Platine mit einem Griff aus der Halterung entnommen werden, die beispielsweise zugleich auch mit den erforderlichen elektrischen Kontaktierungen versehen sein kann. Hierdurch lassen sich die Anzeigeinstrumente als Einheit austauschen oder außerhalb des Hohlkörpers mit den gewünschten zusätzlichen Anzeigeinstrumenten nachrüsten, die dadurch optimal und mit einem professionellen optischen Erscheinungsbild angepasst werden können.

Die Seitenteile können beispielsweise mittels einer Schraubverbindung mit dem Hohlkörpers verbunden werden. Besonders vorteilhaft ist hingegen eine Weiterbildung der Erfindung, bei der der Hohlkörper zwischen den gegeneinander verspannten Seitenteilen fixiert ist. Hierdurch brauchen an dem Hohlkörper keinerlei Befestigungsmittel vorgesehen werden, so dass insbesondere eine einfache Anpassung des Hohlkörpers erfolgen kann. Hierzu sind die beiden einander gegenüberliegenden Seitenteile beispielsweise mittels einer Schraubverbindung miteinander verbunden. Die Seitenteile können zusätzlich eine Führung, beispielsweise eine Nut, haben, die ein Verrutschen des Hohlkörpers quer zur Fixierrichtung verhindert.

Besonders günstig ist es dabei, wenn die Anzeigeinstrumente in dem Hohlkörper gegenüber den Seitenteilen mit Spiel fixiert sind. Eine Beeinträchtigung der Funktion der Anzeigeinstrumente durch zu hohe, schädigende Montagekräfte kann dadurch vermieden werden. Hierzu eignet sich eine Montage der Anzeigeinstrumente mit ausreichender Toleranz zu den Seitenteilen ebenso wie eine Fixierung mittels elastischer Fixiermittel.

Günstig ist es auch, wenn die Seitenteile gegenüber dem Hohlkörper mittels einer Dichtung abgedichtet sind. Dadurch lässt sich in einfacher Weise eine erheblich verbesserte Abdichtung erreichen, so dass das so geschaffene Kombinationsinstrument sich auch für Anwendungen eignet, bei denen es den Umwelteinflüssen in hohem Maße ausgesetzt ist.

Eine Ausführungsform der Erfindung ist dann besonders vorteilhaft, wenn zumindest ein Seitenteil eine Ausnehmung für eine elektrische Kontaktierung hat. Hierdurch kann der Hohlkörper frei von Öffnungen ausgeführt sein, wodurch sich ein weiter verbesserter Schutz des Hohlkörpers gegen Umwelteinflüsse erreichen lässt. Die elektrische Kontaktierung kann beispielsweise auch in einen Tragbügel integriert und daher von außen nicht sichtbar angeordnet sein. Ebenso können Schaltelemente oder Steckkontakte in den Seitenteilen angeordnet werden. Die Schwenk-barkeit des Hohlkörpers bleibt dabei uneingeschränkt erhalten. Außerdem kann der Hohlkörper dabei problemlos ausgetauscht werden.

Eine Ausführungsform der Erfindung ist dann besonders vor-vorteilhaft, wenn der Hohlkörper in einer Armaturentafel schwenkbar von einer Betriebsposition, bei der die Anzeigeinstrumente für einen Betrachter sichtbar sind, in eine RuRuheposition, in der die Anzeigeinstrumente durch die Armaturentafel verdeckt sind, angeordnet ist. Hierdurch kann das Kombinationsinstrument nach Gebrauch in eine Ruheposition geschwenkt werden, so dass es vor Beschädigung und Umwelteinflüssen geschützt in der Armaturentafel liegt. Der Instrumententräger kann hierzu seitlich drehbar gelagert sein. Bei im wesentlichen kreisrunden Instrumententrägern kann die Armaturentafel hierzu den Umfang des Instrumententrägers um mehr als die Hälfte umschließen, so dass hierdurch eine einfache Drehbarkeit erreicht wird. Die Kontaktierungen können zugleich für einen Betrachter unsichtbar im Inneren der Armaturentafel verlegt werden. Möglich ist es auch, an dem Instrumententräger einen Schließmechanismus anzubringen, wodurch ein unbefugtes Schwenken verhindert und somit zugleich ein guter Diebstahlschutz erreicht wird.

Eine andere besonders praktische Ausführungsform der Erfindung wird durch eine gegenüber dem Hohlkörper relativ bewegliche Abdeckung zum Schutz gegen Fremdlichteinfall und Beschädigung erreicht. Eine Abdeckung für Anzeigeinstrumente ist in der FR 2 497 996 beschrieben. Die Abdeckung bedeckt einen einstellbaren Teilbereich des Hohlkörpers, insbesondere des die Anzeigeinstrumente abdeckenden, transparenten Bereiches und ermöglicht so einen einfachen und wirkungsvollen Schutz, beispielsweise gegen Sonneneinstrahlung.

Die Abdeckung kann hierzu um eine an dem Kombinationsinstrument angeordnete Achse schwenkbar sein.

Besonders günstig ist es hingegen, wenn die Abdeckung in einer Führung des jeweiligen Seitenteiles verschiebbar ist. Dadurch kann eine zugleich platzsparende und wirkungsvolle Ausführung der Abdeckung erreicht werden. Dabei wird die Abdeckung ähnlich eines Rollladens in der beispielsweise als Nut ausgeführten Führung des Seitenteiles bewegt. Die Seitenteile können hierzu auch eine von dem Hohlkörper abweichende Querschnittsfläche aufweisen, so dass die Abdeckung in einer mit Abstand zu dem Hohlkörper angeordneten Führung verschiebbar sein kann. Weiterhin verändert sich die relative Lage der Abdeckung zu dem Hohlkörper durch eine mögliche Schwenkbewegung nicht, so dass eine einfache Bedienung ermöglicht wird.

Die Erfindung lässt verschiedene Ausführungsformen zu. Zur weiteren Verdeutlichung ihres Grundprinzips sind drei davon in der Zeichnung dargestellt und werden nachfolgend beschrieben. Übereinstimmende Bauteile sind dabei mit gleichen Bezugszeichen versehen. Die Zeichnung zeigt in
- Fig. 1: ein erfindungsgemäßes Kombinationsinstrument in einer Vorderansicht,
- Fig. 2: das Kombinationsinstrument in einer Seitenansicht,
- Fig. 3: das Kombinationsinstrument in einer geschnittenen Seitenansicht,
- Fig. 4: ein in eine Armaturentafel eingebautes Kombinationsinstrument,
- Fig. 5: ein weiteres Kombinationsinstrument mit abgenommenem Seitenteil in einer Seitenansicht.

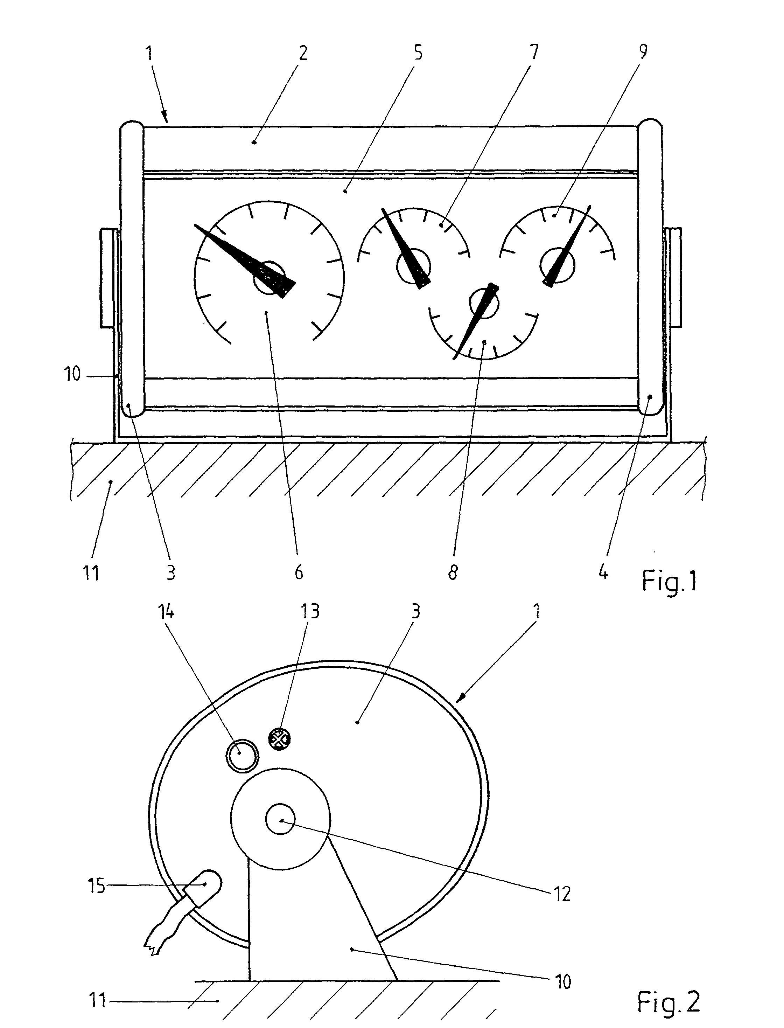

Figur 1 zeigt eine Vorderansicht eines erfindungsgemäßen Kombinationsinstrumentes 1. Das Kombinationsinstrument 1 hat einen transparenten, rohrförmigen Hohlkörper 2, dessen Enden jeweils von einem Seitenteil 3, 4 verschlossen sind. Durch den im wesentlichen transparent ausgeführten Hohlkörper 2 sind mehrere in seinem Inneren auf einer gemeinsamen Platine 5 befestigte Anzeigeinstrumente 6, 7, 8, 9 von außen sichtbar angeordnet. Die Seitenteile 3, 4 sind mittels eines Tragbügels 10 mit einem nur beispielhaft dargestellten Abschnitt einer Armaturentafel 11 so verbunden, dass der Hohlkörper 2 um seine Längsachse schwenkbar angeordnet ist.

Figur 2 zeigt eine Seitenansicht des Kombinationsinstrumentes 1. Dargestellt ist das Seitenteil 3, welches mittels des Tragbügels 10 mit der Armaturentafel 11 verbunden ist. Das Kombinationsinstrument 1 ist um eine Schwenkachse 12 drehbar gelagert, so dass ein individueller, für den Betrachter komfortabler Ablesewinkel einstellbar ist. Das Seitenteil 3 ist mittels einer Schraube 13 mit dem in Figur 1 dargestellten, gegenüberliegenden Seitenteil 4 verschraubt. Das Seitenteil 3 hat weiterhin ein Schaltelement 14, welches beispielsweise zur Betätigung eines Rückstellmechanismusses für einen Kilometeroder Betriebsstundenzähler verwendet werden kann. Weiterhin ist das Seitenteil 3 mit einer außerhalb des Blickfeldes eines Betrachters angeordneten, elektrischen Kontaktierung 15 versehen.

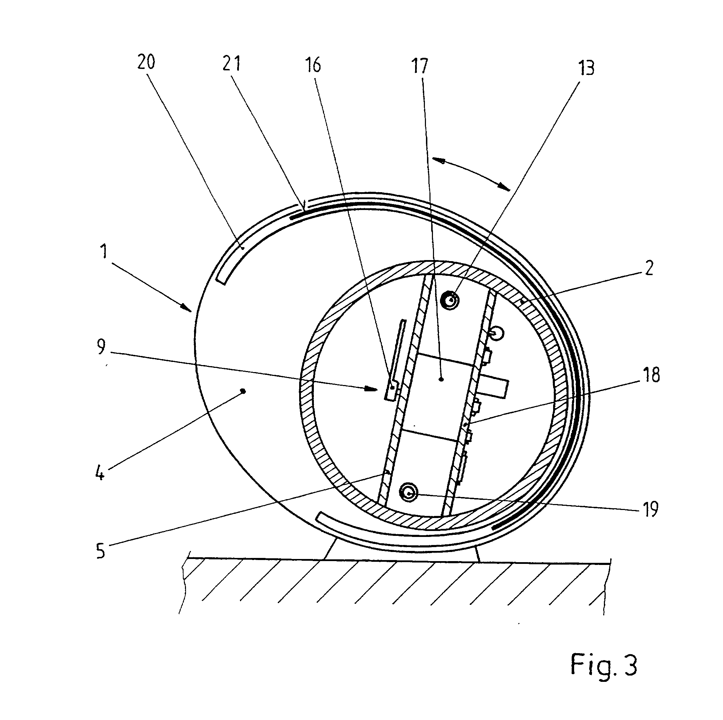

Die Figur 3 zeigt eine geschnittene Seitenansicht des Kombinationsinstrumentes 1. Der im wesentlichen kreisrunde Hohlkörper 2 nimmt in seinem Inneren das Anzeigeinstrument 9 auf, dessen Zeigerfahne 16 mittels eines auf der Rückseite der gemeinsamen Platine 5 angeordneten Zeigerantriebes 17 auslenkbar ist. In einem für den Betrachter nicht sichtbaren, rückwärtigen Bereich des Hohlkörpers 2 ist eine weitere, die Steuerungselemente des Zeigerinstrumentes tragende Platine 18 angeordnet. Die Platinen 5, 18 sind jeweils in einer nicht dargestellten Führung in den Seitenteilen 3, 4 gehalten. Zur Montage werden die Platinen 5, 18 zunächst mit dem Seitenteil 4 verbunden. Anschließend wird der Hohlkörper 2 über die Platinen 5, 18 gestülpt und schließlich wird das zweite, nicht dargestellte Seitenteil mittels der Schraube 13 und einer weiteren Schraube 19 gegen das erste, in Figur 1 dargestellte Seitenteil 3 verspannt. Zuvor wird in eine im Randbereich der Seitenteile 3, 4 angeordnete Führung 20 eine im Bereich der Führung 20 verschiebbare Abdeckung 21 eingesetzt. Diese Abdeckung 21 dient dem Schutz des Kombinationsinstrumentes 1 vor Umwelteinflüssen, beispielsweise Sonneneinstrahlung, und vor mechanischer Beschädigung.

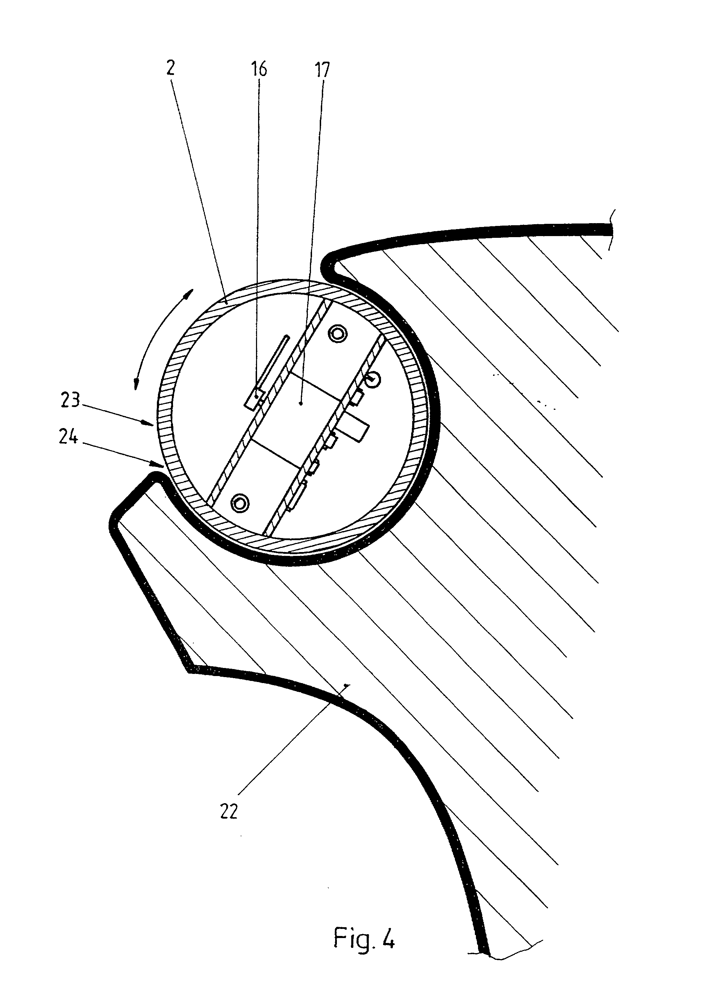

Figur 4 zeigt ein in eine Armaturentafel 22 eingelassenes Kombinationsinstrument 23. Gegenüber dem in Figur 1 gezeigten Kombinationsinstrument 1 ist der Hohlkörper 2 hierbei unmittelbar in eine Ausnehmung 24 der Armaturentafel 22 drehbar eingesetzt, so dass ein Tragbügel entfällt. Der Hohlkörper 2 kann dabei in einem beliebigen Winkel gedreht werden, so dass die mittels des Zeigerantriebes 17 auslenkbare Zeigerfahne 16 optimal ablesbar ist. Weiterhin kann der Hohlkörper 2 auch gegenüber der dargestellten Betriebsposition um 180° in eine rückwärtige Ruheposition geschwenkt werden, wodurch das Kombinationsinstrument 1 besonders gut geschützt ist und beispielsweise auch zum Schutz gegen Diebstahl die Inbetriebnahme des Fahrzeuges verhindert. Hierzu kann der Hohlkörper 2 insbesondere im Zweikomponenten-Spritzgussverfahren hergestellt und lediglich auf der Vorderseite transparent ausgeführt sein.

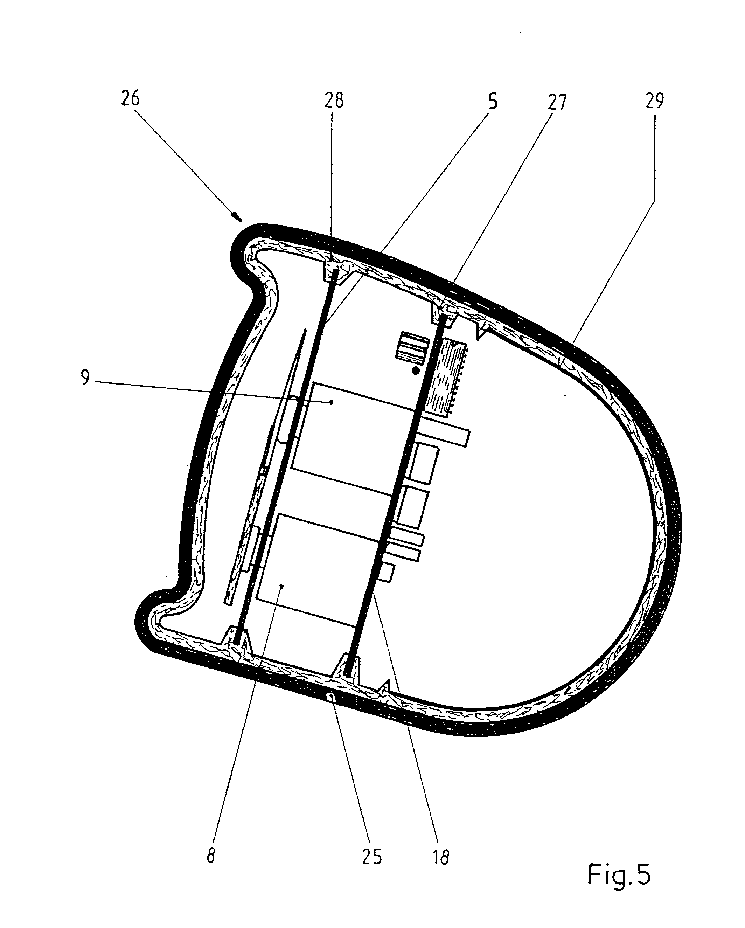

Figur 5 zeigt einen geschnitten dargestellten Hohlkörper 25 eines weiteren Kombinationsinstrumentes 26 in einer Seitenansicht. Bei dieser Ausführungsform hat der Hohlkörper 25 eine abgewandelte Querschnittsform mit je einem auf seiner Innenseite angeordneten Fixiermittel 27, 28 zur Aufnahme einer gemeinsamen Platine 5 und der rückwärtigen Platine 18. Der im wesentlichen transparente Hohlkörper 25 ist in seinem hinteren Bereich mittels einer lichtundurchlässigen Sichtschutzfolie 29 gegenüber einem Betrachter abgeschirmt. Andere Ausführungsformen können auch ohne eine solche Sichtschutzfolie 29 ausgerüstet sein, um die Betrachtung der innen angeordneten, elektronischen Bauteile zu ermöglichen. Der den Anzeigeinstrumenten 8, 9 zugewandte Abschnitt des Hohlkörpers 25 kann eine beliebige, zweckdienliche Ausgestaltung, beispielsweise konvex oder auch konkav, haben. Die Oberfläche des Hohlkörpers 25 kann neben transparenten Abschnitten zusätzlich auch undurchsichtige Beschichtungen oder Bereiche mit farbigen oder diffus lichtdurchlässigen Bereichen haben.

## Patentansprüche

1. Kombinationsinstrument, insbesondere für ein Wasserfahrzeug, mit einem Instrumententräger zur Aufnahme mehrerer Anzeigeinstrumente, wobei der Instrumententräger einen zumindest abschnittsweise transparenten Hohlkörper (2, 25) hat, welcher in seinem Inneren die AnAnzeigeinstrumente (6, 7, 8, 9) in der Weise aufnimmt, dass die Anzeigen der Anzeigeinstrumente (6, 7, 8, 9) durch den Hohlkörper (2, 25) für einen Betrachter sichtbar sind, **dadurch gekennzeichnet, dass** der Hohlkörper rohrförmig ist und dass die Enden des Hohlkörpers (2) jeweils mittels eines Seitenteiles (3, 4) verschlossen sind.

2. Kombinationsinstrument nach Anspruch 1, **dadurch gekennzeichnet, dass** der Hohlkörper (2, 25) einen transparenten, der Vorderseite der Anzeigeinstrumente (6, 7, 8, 9) zugeneigten Abschnitt und einen undurchsichtigen, der Rückseite der Anzeigeinstrumente (6, 7, 8, 9) zugeneigten Abschnitt hat.

3. Kombinationsinstrument nach Anspruch 2, **dadurch gekennzeichnet, dass** der Hohlkörper (2, 25) im Zweikomponenten-Spritzgießverfahren hergestellt ist und einen ersten, transparenten Bereich und einen zweiten, lichtundurchlässigen Bereich aufweist.

4. Kombinationsinstrument nach einem der vorhergehenden Ansprüche, **dadurch gekennzeichnet, dass** die Seitenteile (3, 4) ein Fixiermittel für die Anzeigeinstrumente (6, 7, 8, 9) aufweisen.

5. Kombinationsinstrument nach Anspruch 4, **dadurch gekennzeichnet, dass** das Fixiermittel zum Einstecken einer gemeinsamen Platine (5, 18) der Anzeigeinstrumente (6, 7, 8, 9) ausgeführt ist

6. Kombinationsinstrument nach einem der vorhergehenden Ansprüche, **dadurch gekennzeichnet, dass** der Hohlkörper (2, 25) zwischen den gegeneinander verspannten Seitenteilen (3, 4) fixiert ist.

7. Kombinationsinstrument nach Anspruch 6, **dadurch gekennzeichnet, dass** die Anzeigeinstrumente (6, 7, 8, 9) in dem Hohlkörper (2, 25) gegenüber den Seitenteilen (3, 4) mit Spiel fixiert sind.

8. Kombinationsinstrument nach Anspruch 6 oder 7, **dadurch gekennzeichnet, dass** die Seitenteile (3, 4) gegenüber dem Hohlkörper (2, 25) mittels einer Dichtung abgedichtet sind.

9. Kombinationsinstrument nach einem der vorhergehenden Ansprüche, **dadurch gekennzeichnet, dass** zumindest ein Seitenteil (3, 4) eine Ausnehmung für eine elektrische Kontaktierung (15) hat.

10. Kombinationsinstrument nach einem der vorhergehenden Ansprüche, **dadurch gekennzeichnet, dass** der Hohlkörper (2, 25) in einer Armaturentafel (11, 22) schwenkbar von einer Betriebsposition, bei der die Anzeigeinstrumente (6, 7, 8, 9) für einen Betrachter sichtbar sind, in eine Ruheposition, in der die Anzeigeinstrumente (6, 7, 8, 9) durch die Armaturentafel (11, 22) verdeckt sind, angeordnet ist.

11. Kombinationsinstrument nach einem der vorhergehenden Ansprüche, **gekennzeichnet durch** eine gegenüber dem Hohlkörper (2) relativ bewegliche Abdeckung (21) zum Schutz gegen Fremdlichteinfall und Beschädigung.

12. Kombinationsinstrument nach Anspruch 11, **dadurch gekennzeichnet, dass** die Abdeckung (21) in einer Führung (20) des jeweiligen Seitenteiles (3, 4) verschiebbar ist.

## Claims

1. Instrument cluster, in particular for a watercraft, having an instrument carrier for holding a plurality of indicating instruments, the instrument carrier having a hollow body (2, 25) which is transparent at least in sections and in its interior accommodates the indicating instruments (6, 7, 8, 9) in such a way that the displays of the indicating instruments (6, 7, 8, 9) are visible to an observer through the hollow body (2, 25), **characterized in that** the hollow body is tubular and **in that** the ends of the hollow body (2) are each closed off by means of a side part (3, 4).

2. Instrument cluster according to Claim 1, **characterized in that** the hollow body (2, 25) has a transparent section which is directed towards the front side of the indicating instruments (6, 7, 8, 9) and an opaque section which is directed towards the rear side of the indicating instruments (6, 7, 8, 9).

3. Instrument cluster according to Claim 2, **characterized in that** the hollow body (2, 25) is produced using the two-component injection-moulding process and has a first, transparent area and a second, non-transparent area.

4. Instrument cluster according to one of the preceding claims, **characterized in that** the side parts (3, 4) have a fixing means for the indicating instruments (6, 7, 8, 9).

5. Instrument cluster according to Claim 4, **characterized in that** the fixing means is designed to plug in a circuit board (5, 18) which is common to the indicating instruments (6, 7, 8, 9).

6. Instrument cluster according to one of the preceding claims, **characterized in that** the hollow body (2, 25) is fixed between the side parts (3, 4), which are stressed towards one another.

7. Instrument cluster according to Claim 6, **characterized in that** the indicating instruments (6, 7, 8, 9) are fixed in the hollow body (2, 25) with play relative to the side parts (3, 4).

8. Instrument cluster according to Claim 6 or 7, **characterized in that** the side parts (3, 4) are sealed with respect to the hollow body (2, 25) by means of a seal.

9. Instrument cluster according to one of the preceding claims, **characterized in that** at least one side part (3, 4) has a recess for an electrical contact means (15).

10. Instrument cluster according to one of the preceding claims, **characterized in that** the hollow body (2, 25) is arranged in a dashboard (11, 22) in such a manner that it can pivot from an operating position, in which the indicating instruments (6, 7, 8, 9) are visible to an observer, into an at-rest position, in which the indicating instruments (6, 7, 8, 9) are covered by the dashboard (11, 22).

11. Instrument cluster according to one of the preceding claims, **characterized by** a cover (21) which can move relative to the hollow body (2), for the purpose of protection against the incidence of extraneous light and damage.

12. Instrument cluster according to Claim 11, **characterized in that** the cover (21) is displaceable in a guide (20) of the respective side part (3, 4).

## Revendications

1. Combiné d'instruments, en particulier pour un véhicule aquatique, avec un support d'instruments destiné à recevoir plusieurs instruments d'affichage, le support d'instruments ayant un corps creux (2, 25) transparent au moins par endroits, lequel reçoit dans son espace intérieur les instruments d'affichage (6, 7, 8, 9) de telle sorte que les indicateurs des instruments d'affichage (6, 7, 8, 9) soient visibles pour un observateur à travers le corps creux (2, 25), **caractérisé en ce que** le corps creux a une forme tubulaire et **en ce que** chaque extrémité du corps creux (2) est fermée au moyen d'une partie latérale (3, 4).

2. Combiné d'instruments selon la revendication 1, **caractérisé en ce que** le corps creux (2, 25} a une partie transparente et tournés vers le côté avant des instruments d'affichage (6, 7, 8, 9) et une partie opaque et tournée vers le côté arrière des instruments d'affichage (6, 7, 8, 9).

3. Combiné d'instruments selon la revendication 2, **caractérisé en ce que** le corps creux (2, 25) est fabriqué dans un procédé de moulage par injection à deux composants et présente une première zone transparente et une deuxième zone opaque.

4. Combiné d'instruments selon l'une des revendications précédentes, **caractérisé en ce que** les parties latérales (3, 4) présentent un moyen de fixation pour les instruments d'affichage (6, 7, 8, 9).

5. Combiné d'instruments selon la revendication 4, **caractérisé en ce que** le moyen de fixation est réalisé pour permettre l'insertion d'une platine (5, 18) commune des instruments d'affichage (6, 7, 8, 9).

6. Combiné d'instruments selon l'une des revendications précédentes, **caractérisé en ce que** le corps creux (2, 25) est fixé entre les parties latérales (3, 4) serrées l'une par rapport à l'autre.

7. Combiné d'instruments selon la revendication 6, **caractérisé en ce que** les instruments d'affichage (6, 7, 8, 9) sont fixés avec du jeu dans le corps creux (2, 25) par rapport aux parties latérales (3, 4).

8. Combiné d'instruments selon la revendication 6 ou 7, **caractérisé en ce que** les parties latérales (3, 4) sont rendues étanches au moyen d'un joint par rapport au corps creux (2, 25).

9. Combiné d'instruments selon l'une des revendications précédentes, **caractérisé en ce qu'**au moins une partie latérale (3, 4) a un évidement pour un dispositif (15) de mise en contact électrique.

10. Combiné d'instruments selon l'une des revendications précédentes, **caractérisé en ce que** le corps creux (2, 25) est disposé dans un tableau de bord (11, 22) de façon à pouvoir basculer d'une position de service, dans laquelle les instruments d'affichage (6, 7, 8, 9) sont visibles pour un observateur, à une position de repos, dans laquelle les instruments d'affichage (6, 7, 8, 9) sont masqués par le tableau de bord (11, 22).

11. Combiné d'instruments selon l'une des revendications précédentes, **caractérisé par** un recouvrement (21) mobile par rapport au corps creux (2), pour la protection contre l'incidence de lumière extérieure et les détériorations.

12. Combiné d'instruments selon la revendication 11, **caractérisé en ce que** le recouvrement (21) peut être déplacé dans un guide (20) de la partie latérale (3, 4) respective.
